# EUROPÄISCHE PATENTSCHRIFT

(11) **EP 0 890 532 B1**
(45) Veröffentlichungstag und Bekanntmachung des Hinweises auf die Patenterteilung: **08.09.2004**
(21) Anmeldenummer: 98110742.8
(22) Anmeldetag: 12.06.1998
(51) Int. Cl.: B65G 23/44, B65H 23/04

(54) **Spannvorrichtung für einen Falzapparat**
Tensioning device for a folding apparatus
Dispositif tendeur pour un appareil à plier

(30) Priorität: 11.07.1997 US 891668
(43) Veröffentlichungstag der Anmeldung: 13.01.1999
(73) Patentinhaber: Heidelberger Druckmaschinen Aktiengesellschaft, 69115 Heidelberg (DE)
(72) Erfinder: Belanger, Roger Robert, Dover, NH 03820 (US); Hilliard, Michael William, Somersworth, NH 03878 (US)
(74) Vertreter: Hörschler, Wolfram Johannes, Dipl.-Ing.

(56) Entgegenhaltungen:
- AT-B- 368 469
- DE-A- 2 447 156
- DE-A- 19 600 379
- US-A- 2 759 594

## Beschreibung

Die vorliegende Erfindung bezieht sich auf eine Spannvorrichtung für einen Falzapparat, insbesondere einen Falzapparat mit einem Transportzuführband.

Die GB 2 299 327 offenbart ein Transportsystem in einer Bogenfalzmaschine. Eine Vielzahl von Transportbändern formt je einen Rahmen um die Anzahl der Umlenkkränze und einen/den Zylinder. Spannvorrichtungen dienen dazu, die Spannung in der Bändern zu halten. Ein einzelnes Spannelement mit einseitger Lagerung paßt die Spannung in der Vielzahl von Bändern an. Um das Entfernen und Ersetzen von verbrauchten Transportbändern zu erleichtern, sind das eine Ende eines jeden Umlenkkranzes und das dazugehörige Ende des Zylinders von ihrer Lagerung ablösbar. Das Ablösen könnte mittels axialer Trennung der Lagerung von den entsprechenden Enden der Umlenkkränze und des Zylinders stattfinden. Die Spannvorrichtung wird vor der Bandentfernung deaktiviert, um einen Durchhang in den Bändern zu bilden, welcher wiederum die Entfernung der Bänder erleichtert. Einer der Umlenkkränze kann für die einzelnen Bänder die Form einer koaxialen Scheibe annehmen. Der Zylinder, an dem die Bänder angebracht sind, kann beispielsweise ein Falzzylinder eines Falzapparates sein.

Bekannte Ausführungsformen und Verwirklichungen der Spannvorrichtung umfassen einzelne Arme, die an einer gemeinsamen Drehachse angebracht sind. Die gemeinsame Drehachse bringt den Nachteil mit sich, daß die Spannungen von einem zum anderen Band durch den Mangel Einzelspannungskontrolle der Bänder, variieren können. Die Spannungsangleichung der einzelnen Bänder findet durch diese Einrichtung nicht statt. Auf der anderen Seite sind einzelne federvorgespannte Spannhebel vorstellbar, aber schwierig mit geringem Abstand zueinander herstellbar. Weiterhin verfügen die bekannten Ausführungen nicht über genügend Bauraum für einfaches Bänderwechseln.

Eine Drehspannvorrichtung wie sie aus dem Stand der Technik bekannt ist, erfordert relativ viel Platz, um den hohen Bänderdurchhang aufzunehmen. Dies trifft insbesondere für Systeme mit einer Zweipositionsbandführung zu. Zum einen könnte ein Bandsystem einen ersten Pfad um seine entsprechende Rolle drehen, wobei eine der Rollen eine erste Position einnimmt, die einer Betriebsposition entspricht. Die Rolle kann in eine zweite Position stellbar sein, die beispielsweise einer Wartungsposition oder einer zweiten Betriebsposition entsprechen kann. Die zweite Position der Rolle kann einen kürzeren Bandpfad als die erste Position erfordern, wodurch die überschüssige Bandlänge vorteilhaft durch die Spannvorrichtung aufgenommen werden könnte. Es wäre von Vorteil, wenn die Spannrollen so ausgestattet sind, dass sie das überschüssige Band durch im wesentlichen lineares Verschieben aufnehmen können, obwohl sie nicht so viel Platz benötigen wie ein Drehsystem, welches radial Hebelstangen und eine radiale Bewegung umfasst.

Die US 2,759,594 offenbart eine Einrichtung zur Spannung von Transportbändern in einem Transportbandsystem. Jedem über einen endlosen Pfad umlaufenden Transportband des Transportbandsystems ist eine Spanneinheit zugeordnet. An jeder Spanneinheit ist eine Rolle drehbar aufgenommen, wobei die Rolle das zugeordnete Transportband spannt.

Aufgrund der Abnutzung der Bänder und abhängig vom Bänderdurchhang zwischen den zwei verschiedenen Positionen, ist es weiterhin schwieriger, eine korrekte Bandspannung aufrechtzuerhalten und an ihr ein Drehbandspannsystem anzubringen, im Vergleich zu einem Bandspannsystem gemäß der vorliegenden Erfindung.

Eine Aufgabe der vorliegenden Erfindung besteht darin, ein einfaches Kompensieren einer Bandlänge ohne irgendwelchen zusätzlichen Durchführungen zu ermöglichen.

Eine weitere Aufgabe der Erfindung besteht darin, ein Band ohne Unterbrechung oder Wechseln der Spannung der verbleibenden Bänder zu wechseln.

Weiterhin soll eine visuelle Angabe der auszuwechselnden Bänder geschaffen werden, während andere Bänder unter der Spannung gehalten werden und in einem aktiven Zustand gehalten werden.

Gemäß der vorliegenden Erfindung enthält eine Vorrichtung zur Spannung von Transportbändern für flache Produkte in einem Falzapparat eine Spanneinheit und -walze, die an jeder der Vielzahl von einzelnen Transportbändern angebracht sind, die auf verschiedenen endlosen Pfaden rotieren. Die Spanneinheiten ihrerseits sind drehbar auf einem Support angebracht, der eine schnelle Ausfalldetektion der einzelnen Transportbänder ermöglicht.

Die vorliegende Erfindung weist viele vorteilhafte Effekte und Ergebnisse auf. Da eine einheitliche Spannung von einem zum anderen Band erhalten bleiben kann, kann hierdurch ein einheitlicheres Bandgeschwindigkeitsprofil erreicht werden. Weil jedes Band eine eigene Spannungskontrolle hat, können Bänder mit unterschiedlicher Breite in ein und demselben Transportsystem des Falzapparates benutzt werden. Zusätzlich, wenn eines der Bänder gewechselt wird, können die verbleibenden anliegenden Bänder unter Spannung gehalten werden, wodurch sie nicht unbeabsichtigt verschoben werden kann. Wenn beispielsweise ein Band versagt, bremst oder ausfällt, können die übrigen Bänder in ihrer ursprünglichen Spannung gehalten werden. Aus diesem Grund ist ein Komplettausfall wahrscheinlich weniger schädlich, als wenn die verbleibenden Bänder den Transport der Produkte fortführen, ohne eine Störung im Falzapparat zu verursachen.

Ein weiterer Vorteil der vorliegende Erfindung liegt darin, falls ein Band ausfällt, fällt die Antriebs- oder Spanneinheit aus der Anordnung mit den übrigen Antriebseinheiten heraus, in eine inaktive Position. Die inaktive Position ermöglicht eine schnelle visuelle Angabe, daß eine Wartung erforderlich ist, wie zum Beispiel einen Spannungsausgleich oder einen Bandwechsel für die jeweilige Transporteinheit. Die Spanneinheiten können derart drehbar an einem Support angebracht sein, so daß jede Spanneinheit sich in eine visuell sichtbare inaktive Position bei Ausfall des jeweiligen Transportbandes bewegen kann.

Die Spanneinheiten sind mit ausreichend Platz zwischen den aufeinanderfolgenden Einheiten versehen, um den Zugang für der Bändereinführung auf die Spanneinheit zu gestalten. Wenn die Transportbänder für den normalen Betrieb richtig gespannt werden, nehmen die Spanneinheiten eine erste oder aktive Position ein. Wenn ein Transportband ausfällt, nehmen die Spanneinheiten die zweite oder inaktive Position ein. Der Support auf dem die Spanneinrichtungen angebracht sind, kann einen Ausschlag enthalten, um die Spanneinheiten in ihrer zweiten Position zu halten, bei Ausfall eines einzelnen Transportbandes, und gleichzeitig die Antriebseinheit sichtbar für die Inspektion zu halten.

Das Spannelement der einzelnen Transportbänder kann beispielsweise einen PneumatikZylinder aufweisen, der an einer geregelten Luftdruckquelle angeschlossen ist.

Pneumatische Zylinder haben den wichtigen Vorteil, ein komprimierbares Fluids, das heißt Druckluft als Arbeitsmedium zu nutzen. Aus diesem Grund haben pneumatische Zylinder eine Dämpfungsfähigkeit, die den Betrieb sanfter ablaufen lassen, zum Beispiel wenn Produkte unterschiedlicher Dicke durch die Bänder transportiert werden. Die Fachleute werden erkennen, daß alternative Spannelemente ebenfalls verwendet werden können, wie beispielsweise hydraulische Zylinder, die im wesentlichen unkomprimentierbares Fluid und ein Ausdehnungsgefäß benötigen. Andere mögliche Arrangements beinhalten beispielsweise Federsysteme oder Massen- und Gravitationsspannungssysteme.
- Fig. 1: zeigt ein schematisches Diagramm des Transportsystems mit einer Spannvorrichtung bekannt aus dem Stand der Technik;
- Fig. 2a: zeigt eine Draufsicht des Transportsystems, welches die einzelnen Spanneinheiten in der Anordnung auf einem Support zeigt,
- Fig. 2b: zeigt eine Seitenansicht des Transportsystems mit geschlossenen Wegen der Bänder;
- Fig. 3a: zeigt eine vergrößerte Draufsicht des Supports und einer drehbar angebrachten Antriebseinheit gemäß einer Eigenschaft der vorliegenden Erfindung;
- Fig. 3b: zeigt eine vergrößerte Seitenansicht des Supports und einer drehbar angebrachten Antriebseinheit gemäß einer Eigenschaft der vorliegenden Erfindung.

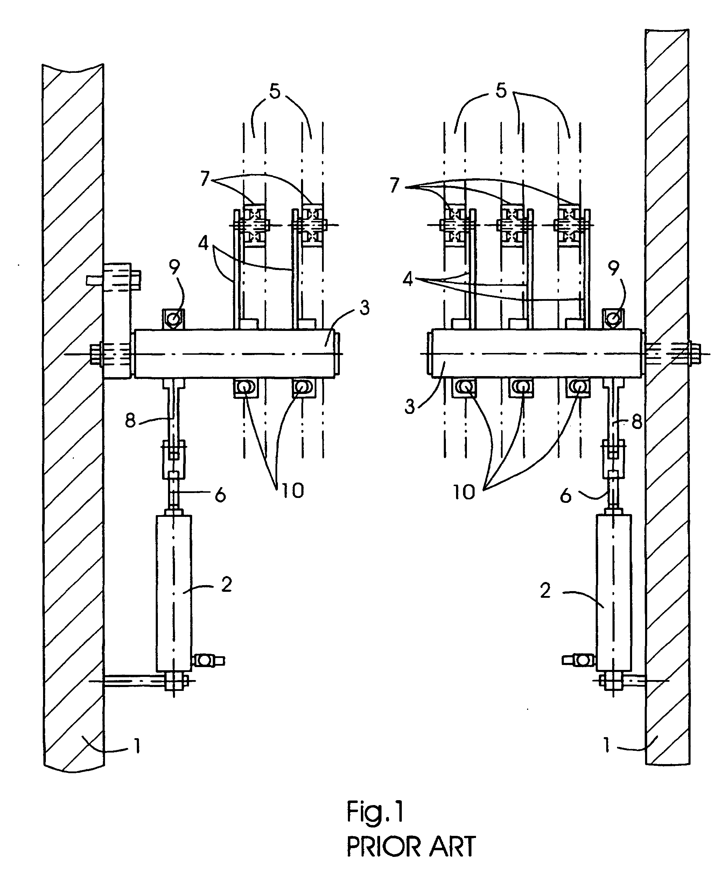

Fig. 1 zeigt ein schematisches Diagramm eines bekannten Transportsystems mit einer Spannvorrichtung. Das Diagramm zeigt zwei Wellen 3, die an den Seitenwänden 1 des Falzapparates in Buchsen angebracht sind. Die Wellen 3 werden mittels Antriebeinheiten 2 gedreht, von denen aus sich Achsen 6 erstrecken. Die Achsen 6 sind mit den Hebeln 8 verbunden, die die Welle 3 drehen. Die Hebel 8 werden durch Klemmen 9 auf den Oberflächen der Wellen 3 befestigt. Beide Wellen 3 unterstützen die Hebel 4; jedem Hebel 4 ist eine Bänderrolle 7 zugeordnet, um die Bänder 5 zu spannen (schematisch dargestellt). Die Hebel 4 sind an der Welle 3 mittels Klemmen 10 angebracht, die eine Anordnung der Hebel 4 auf der Welle 3 ermöglichen. Anpassung der Spannung in einem der Bänder 5 verursacht eine unerwünschte Änderung der Spannung der übrigen Bänder 5. Die Bänderrollen 7, die mittels der Hebel 4 an der Welle 3 angebracht sind, werden alle verdreht, wenn die Welle 3 sich bewegt. Deswegen verursacht das Anordnen von nur einem Band 5 eine unerwünschte Manipulation von allen anderen Bändern 5 auf der gemeinsamen Welle 3.

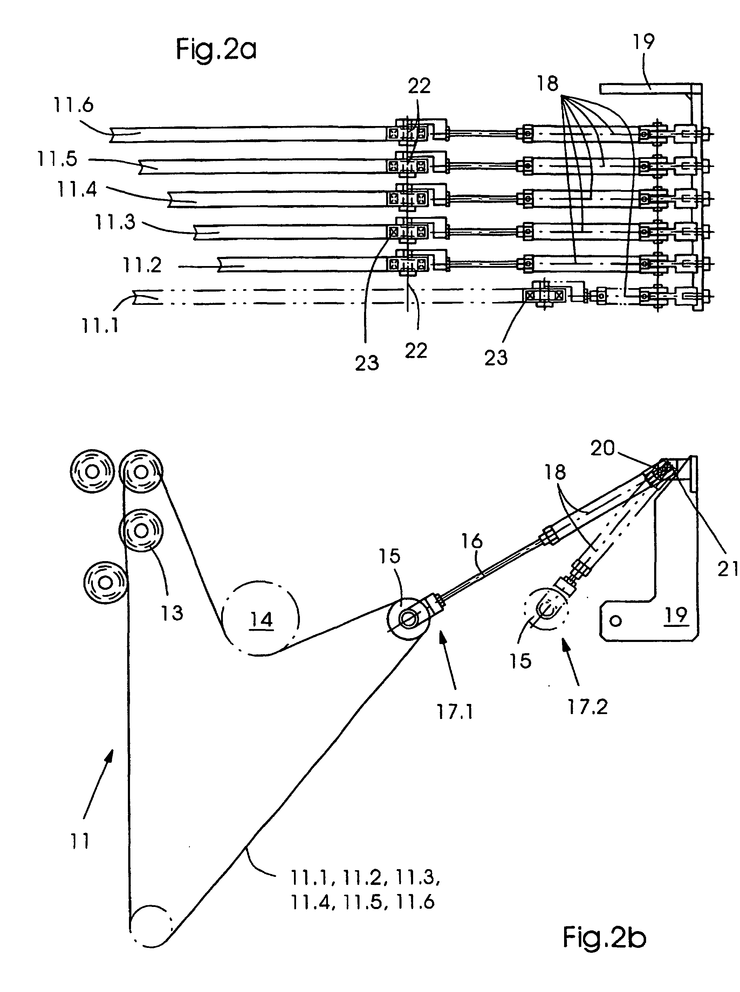

Fig. 2a zeigt eine Draufsicht einer exemplarischen Ausführung des Transportsystems 11 gemäß der vorliegenden Erfindung, die beispielsweise eine Vielzahl von einzelnen Transportbändern 11.1 bis 11.6 aufweist, dargestellt als Bänder. Die einzelnen Transportbänder 11.1 bis 11.6 drehen sich über viele Rollen oder scheibenförmige Elemente, wie Supportrollen 13 und eine Antriebswalze 14. Im Pfad eines jeden einzelnen Transportbandes 11.1 bis 11.6 ist beispielsweise eine Bandwalze 15.1 bis 15.6 mit eingeschlossen, die an einer Achse 16 der Spanneinheit 18.1 bis 18.6 angebracht ist. Die Bandwalzen 15.1 bis 15.6 können zusammen mit dem Bezugszeichen 15 und die Spanneinheit 18.1 bis 18.6 mit dem Bezugszeichen 18 bezeichnet werden.

Eine erste aktive Position der Spanneinheit 18 wird durch das Bezugszeichen 17.2 der Fig. 2b bezeichnet. Die Spanneinheit 18, zum Beispiel Pneumatikzylinder, werden unter geregeltem Luftdruck gehalten. Aufgrund des geregelten Luftdrucks der Spanneinheiten 18, spannen die bewegbaren Bandwalzen 15 die entsprechenden Transportbänder 11.1 bis 11.6. Die Spanneinheiten 18 sind beispielsweise drehbar am Support 19 angebracht. Durch Aufbringen eines geregelten Luftdrucks auf die Spanneinheit 18, nehmen diese eine beständige Betriebsposition 17.2 ein. Wie auch aus den Figuren 2a und 2b ersehen werden kann, können die Spanneinheiten 18 eine zweite Position 17.1 einnehmen, hier in strichpunktierten Linien dargestellt. In Position 17.1 zum Beispiel zeigen die Spanneinheiten 18 einen Ausfall eines der Transportbänder der Anzahl von Transportbändern 11.1 bis 11.6 an. Da die Spanneinheiten 18 sich im wesentlichen aneinander in der ersten Position 17.2 während des normalen Betriebes ausrichten, zeigt eine kleine Auslenkung der Spanneinheiten 18 um ihre Drehachse 20 auf dem Support 19 ein Wartungserfordernis aufgrund eines Spannungsverlustes in einem einzelnen Transportband 11.1 bis 11.6. Bei zum Beispiel visueller Inspektion kann der Bediener feststellen, ob eine Wartung erforderlich ist.

Der rechte Abschnitt der Figuren 2a und 2b zeigt den Support 19 mit einer (zum Beispiel) daran angebrachten Vielzahl von drehbar angebrachten Spanneinheiten 18. Jede der Spanneinheiten 18 umfaßt eine Bandwalze 15, die an einer entsprechenden Achse 16 befestigt ist. Die Vielzahl der einzelnen Transportbänder 11.1 bis 11.6 rotiert um eine Achse 22. Da jede der Spanneinheiten 18.1 bis 18.6 einzeln an ihrer dazugehörigen Bandwalze 15.1 bis 15.6 befestigt ist, kann jede der Bandwalzen 15 eine zu den anderen Bandwalzen 15 unterschiedliche Rotationsachse 22 aufweisen. Jede der beweglichen Bandwalzen 15.1 bis 15.6 ist beispielsweise in einen Endlospfad des entsprechenden einzelnen Transportbandes 11.1 bis 11.6 eingeschlossen und übt eine Spannkraft auf das jeweilige Transportband 11.1 bis 11.6 aus, um dieses in die erste (oder aktive) Position 17.2 zu bringen. Die beweglichen Bandwalzen 15.1 bis 15.6 werden beispielsweise von Lagern 23 einer Spanneinheit 18.1 bis 18.6 zur Drehung um eine Achse 22 aufgenommen.

In Fig. 2b wird die Spanneinheit 18.1 in einer zweiten (oder deaktivierten) Position 17.1 gezeigt, in der das einzelne Transportband 11.1 nicht funktioniert. Die anderen Spanneinheiten 18.2 bis 18.6 werden in einer aktiven Position 17.2 gezeigt, für die die einzelnen Transportbänder 11.2 bis 116 korrekt gespannt sind.

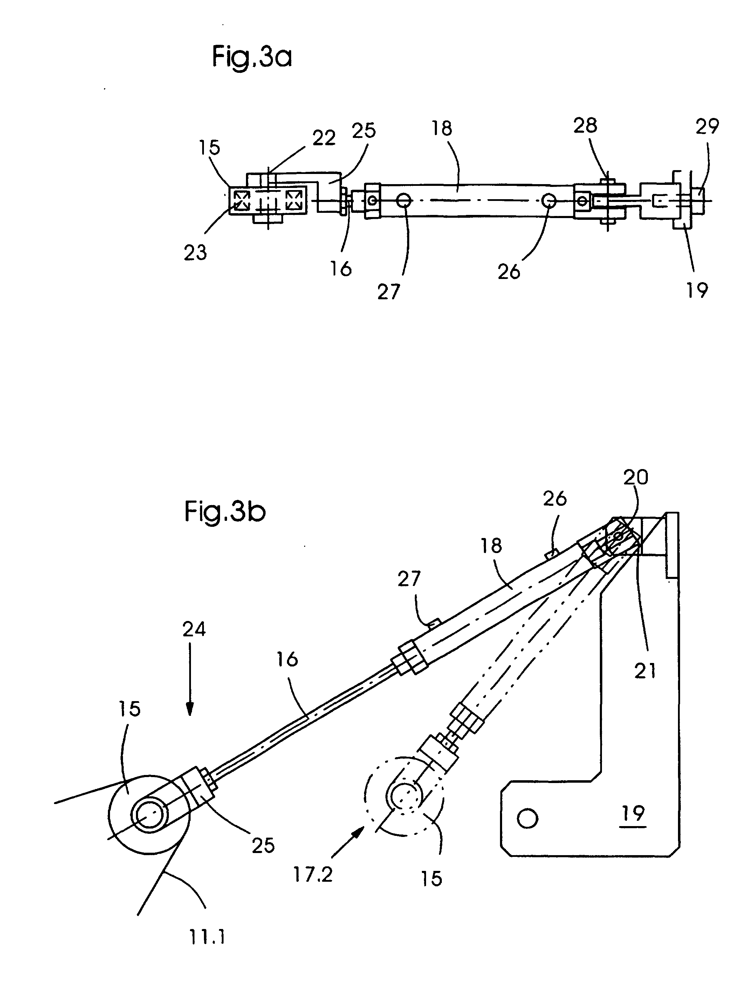

Fig. 3a zeigt eine Spanneinheit 18 im größeren Detail. Jede Bandwalze 15 wird durch auf einem Bandrollensupport 25 aufgenommenes Lager 23 umfaßt, welches an der Achse 16 der Spanneinheit 18 angebracht ist. Mittels Druckeinlaßelementen 27 kann die Spanneinheit 18 mit einer regulierten Luftdruckquelle (nicht gezeigt) verbunden werden, um den Druck in den Spanneinheiten 18 zu erhalten. Um der Luft das Entweichen zu ermöglichen, kann der obere Abschnitt der Spanneinheit 18 eine Öffnung 26 zur Atmosphäre aufweisen. Auf diese Weise ist die freie Bewegung der Achse 16 und ihrer zugehörigen Kolben-Einheit (nicht gezeigt) innerhalb der Spanneinheit 18 möglich, um sich gemäß dem vorbestimmten regulierten Luftdruck zu bewegen. Weiterhin kann die Achse 16 beispielsweise eine rotationshemmende Form, wie ein Rechteck, Sechseckoval oder andere geeignete Formen aufweisen, die einen nicht drehbaren Querschnitt mit der Spanneinheit 18 verbinden, um die Bandwalze 15 in Ausrichtung nach der Lage der einzelnen Transportbänder 11.1 bis 11.6 zu halten.

Die Spanneinheit 18 kann beispielsweise eine erste (oder aktive) Position 17.2 oder eine zweite (deaktivierte) Position 17.1 einnehmen, wie in Fig. 3b gezeigt ist. In der deaktivierten Position 17.1 ist die Spanneinheit 18 in einer von den intakten Spanneinheiten 18 unterschiedlichen Position und kann beispielsweise visuell durch den Bediener als Wartungsaufforderung des einzelnen aus der Reihe scherenden Transportbandes angesehen werden. Die Spanneinheit 18 kann drehbar an einem Bolzen 28 angebracht sein, der durch einen Zwischenstück 19.1 sichergestellt ist. Wie in Fig. 3b gezeigt wird, wird das Zwischenstück 19.1 im Support 19 schlitzgeführt und ermöglicht so einen Anfangseinstellbruch. Die Schraube 29 verbindet das Zwischenstück 19.1 mit dem Support 19. Das Zwischenstück 19.1 kann ein Widerlager 21 aufweisen, wie es in der Seitenansicht der Fig. 3b gezeigt wird, um die Spanneinheiten 18 in ihrer zweiten Position 17.1 zu halten, wenn die Spanneinheit 18, beispielsweise durch das Ausfallen eines der einzelnen Transportbänder 11.1 bis 11.6, die zweite Position 17.2 erreicht hat.

Da die Spanneinheiten 18 gemäß der vorliegenden Erfindung unabhängig voneinander die Spannung in den einzelnen Transportbändern 11.1 bis 11.6 halten, kann die Spannung jedes einzelnen Transportbandes 11.1 bis 11.6 einfach und genau kontrolliert werden. Durch einzelnes Spannen der Bänder anstelle einer gruppenweisen Spannung können verschiedene Bandbreiten verwendet werden. Im Gegenteil zur bisherigen Ausführung fehlt die individuelle Bandspannung und deswegen kann die Spannung nicht genau für die verschiedenen Bandbreiten kontrolliert werden. Einzelne Spanneinheiten 18 können ebenfalls einen Wechsel der einzelnen Transportbänder 11.1 bis 11.6 ermöglichen, ohne Störung der anderen Bänder. Angrenzende Transportbänder, die sich in gutem Zustand befinden, sind nicht vom Ausfall eines der anderen Transportbänder 11.1 bis 11.6 betroffen. Die Vorrichtung gemäß der vorliegenden Erfindung ermöglicht es ebenso, eine schnelle visuelle Identifizierung der auszuwechselnden Bänder durchzuführen. Weiterhin erlaubt die vorliegende Erfindung die Benutzung von sofort verfügbaren, weniger teuren handelsüblichen Teilen, anstelle von teuren Sonderanfertigungen.

Wie in Fig. 2b gezeigt, kann ein Zwei-Wege-Transportsystem eine Zwei-Wege-Rolle 13.1 aufweisen, die in eine erste Position 43 und eine zweite Position 44 positionierbar ist. Die erste Position 43 kann beispielsweise eine Betriebsposition sein und die zweite Position 44 eine Wartungsposition. Eine der Positionen kürzt die Bandweglänge, folglich sollte das überschüssige Band aufgenommen werden. Gemäß der Erfindung können die Zylinder 18 mit einer ausreichenden Hublänge 47 versehen sein, so daß die Bandwalzen 15.1 bis 15.6 das überschüssige Band aufnehmen können, wie es in Fig. 2b gezeigt ist. Das Verfahren gemäß der vorliegenden Erfindung, welches beispielsweise den Linearantrieb eines Luftzylinders benutzt, bietet mehr Bandaufnahmekapazität und ist weniger platzraubend als aus dem Stand der Technik bekannte konventionelle Drehspannsysteme. Beispielsweise sind die Wellen gemäß der bekannten Ausführungen nicht länger erforderlich. Falls ein Band während des Betriebs des Falzapparates ausfällt, aber keinen Papierstau verursacht, können die verbleibenden Bänder bei einem gemäß der vorliegenden Erfindung regulierten Luftdruck den Betrieb fortführen, die es der Produktion ermöglichen, ohne Unterbrechung weiter zu arbeiten.

Ein weiterer wichtiger Vorteil der vorliegenden Erfindung besteht darin, daß kein weiteres Anpassen der einzelnen Dreharmpositionen nötig ist, da eigene Spannung durch die einzelnen Spanneinheiten 18 erzeugt wird, die beispielsweise mit einem geregelten Luftdruck verbunden sein können. Die Spanneinheiten 18 halten die Bandwalzen 15 während des Betriebes des Apparates in einer stabilen Position 17.2.

## Patentansprüche

1. Einrichtung zum Spannen von Transportbandsystemen für flache Produkte in einem Falzapparat, mit einer Anzahl von Spanneinheiten (18), die einer entsprechenden Anzahl von Transportbändern (11.1 - 11.6) eines Transportbandsystems (11) zugeordnet sind und über endlose Pfade umlaufen, und mit einer Anzahl Rollen (15), die jeweils drehbar an einer der Spanneinheiten (18) aufgenommen sind, wobei die Rollen (15) jeweils eines der Transportbänder (11.1 - 11.6), welches den Spanneinheiten (18) jeweils zugeordnet ist, spannen,
**dadurch gekennzeichnet,**
**dass** jede Spanneinheit (18) auf einem Support (19) drehbar aufgenommen ist.

2. Einrichtung gemäß Anspruch 1,
**dadurch gekennzeichnet,**
**dass** sich bei Ausfall eines der Transportbänder (11.1 - 11.6) die dem ausgefallenem der Transportbänder (11.1 - 11.6) entsprechende Spanneinheit (18), die auf dem Support (19) drehbar gelagert ist, in eine den Ausfall des Transportbandes anzeigende Position bewegt.

3. Einrichtung gemäß Anspruch 1,
**dadurch gekennzeichnet,**
**dass** die Spanneinheiten (18) auf dem Support (19) beabstandet voneinander aufgenommen sind.

4. Einrichtung gemäß Anspruch 1,
**dadurch gekennzeichnet,**
**dass** jede der Spanneinheiten (18) im aktiven Zustand eine erste Position einnimmt.

5. Einrichtung gemäß Anspruch 1,
**dadurch gekennzeichnet,**
**dass** bei Ausfall eines der Transportbänder (11.1 - 11.6) die diesem zugeordnete Spanneinheit (18) eine zweite Position einnimmt.

6. Einrichtung gemäß Anspruch 2,
**dadurch gekennzeichnet,**
**dass** am Support (19) Anschläge aufgenommen sind, die bei Ausfall eines der Transportbänder (11.1 - 11.6) die diesem zugeordnete Spanneinheit (18) in ihrer zweiten Position halten.

7. Einrichtung gemäß Anspruch 1,
**dadurch gekennzeichnet,**
**dass** jede der Spanneinheiten (18) einen Stellzylinder (18.1 - 18.6) umfasst, der mit einer geregelten Druckmediumquelle in Verbindung steht.

8. Einrichtung gemäß Anspruch 1,
**dadurch gekennzeichnet,**
**dass** jede der Spanneinheiten (18) eine Stange (16) umfasst, die in ihrem ersten Abschnitt zwischen der Rolle (15) und der Spanneinheit (18) ein eine Verdrehung der Rolle (15) hemmendes Profil aufweist, um die Rolle (15) in der jeweiligen Transportbandebene zu halten.

9. Falzapparat mit mindestens einem Transportbandsystem (11) zur Förderung flacher Produkte,
**gekennzeichnet durch**
wenigstens eine Einrichtung gemäß einem der vorstehenden Ansprüche.

## Claims

1. Device for tensioning transport tape systems for flat products in a folder, having a number of tensioning units (18) associated with a corresponding number of transport tapes (11.1 to 11.6) of a transport tape system (11) and revolving on endless paths, and a number of rollers (15), each of which is rotatably received on one of the tensioning units (18) and tensions one of the transport tapes (11.1 to 11.6) respectively associated with the tensioning units (18),
**characterized in**
**that** each tensioning unit (18) is rotatably received on a support (19).

2. Device according to claim 1,
**characterized in**
**that** upon a failure of one of the transport tapes (11.1 to 11.6), the tensioning unit (18) corresponding to the failed one of the transport tapes (11.1 to 11.6) and rotatably supported on the support (19), moves into a position that indicates the failure of the transport tape.

3. Device according to claim 1,
**characterized in**
**that** the tensioning units (18) are received on the support (19) at a distance from each other.

4. Device according to claim 1,
**characterized in**
**that** each of the tensioning units (18) assumes a first position in the active state.

5. Device according to claim 1,
**characterized in**
**that** upon a failure of one of the transport tapes (11.1 to 11.6), the tensioning unit (18) associated with the failed one of the transport tapes (11.1 to 11.6) assumes a second position.

6. Device according to claim 2,
**characterized in**
**that** stops that, upon a failure of one of the transport tapes (11.1 to 11.6), maintain the tensioning unit (18) associated with the failed one of the transport tapes 11.1 to 11.6) in its second position, are received on the support (19).

7. Device according to claim 1,
**characterized in**
**that** each of the tensioning units (18) comprises an actuating cylinder (18.1-18.6) connected to a regulated pressure medium source.

8. Device according to claim 1,
**characterized in**
**that** each of the tensioning units (18) comprises a rod (16) having a profile that is located in the first portion of the rod (16) between the roller (15) and the tensioning unit (18) and inhibits a rotation of the roller (15) in order to keep the roller (15) in the respective transport tape plane.

9. Folder having at least one transport tape system (11) for conveying flat products,
**characterized by**
at least one device according to one of the preceding claims.

## Revendications

1. Dispositif destiné à tendre des systèmes de bandes de transport pour produits plats dans un appareil de pliage, comprenant une pluralité de tendeurs (18), qui sont associés à un nombre correspondant de bandes de transport (11.1-11.6) d'un système de bandes de transport (11), lesquelles tournent sur des voies continues, et comprenant une pluralité de poulies (15), qui sont logées chacune de manière rotative contre un des tendeurs (18), les poulies (15) tendant chacune l'une des bandes de transport (11.1-11.6) qui est associée respectivement à l'un des tendeurs (18), **caractérisé en ce que** chaque tendeur (18) est logé de manière rotative sur un support (19).

2. Dispositif selon la revendication 1,
**caractérisé en ce que**, en cas de panne de l'une des bandes de transport (11.1-11.6), le tendeur (18) associé à la bande de transport (11.1-11.6) tombée en panne, lequel est logé de manière mobile sur le support (19), se déplace dans une position signalant la panne de la bande de transport.

3. Dispositif selon la revendication 1, **caractérisé en ce que** les tendeurs (18) sont logés sur le support (19) à une distance les unes des autres.

4. Dispositif selon la revendication 1,
**caractérisé en ce que** chacun des tendeurs (18), à l'état actif, se met dans une première position.

5. Dispositif selon la revendication 1,
**caractérisé en ce que**, en cas de panne de l'une des bandes de transport (11.1-11.6), le tendeur (18) associé à celle-ci se met dans une deuxième position.

6. Dispositif selon la revendication 2,
**caractérisé en ce que** sur le support (19) sont réalisées des butées qui, en cas de panne de l'une des bandes de transport (11.1-11.6), maintiennent le tendeur (18) associé à celle-ci dans sa deuxième position.

7. Dispositif selon la revendication 1, **caractérisé en ce que** chacun des tendeurs (18) comporte un cylindre de réglage (18.1-18.6), qui communique avec une source régulée d'un milieu sous pression.

8. Dispositif selon la revendication 1, **caractérisé en ce que** chacun des tendeurs (18) comporte une tige (16) dont un premier tronçon, entre la poulie (15) et le tendeur (18), possède un profil empêchant une torsion de la poulie (15), afin que la poulie (15) soit maintenue dans le plan correspondant de la bande de transport.

9. Appareil de pliage comportant au moins un système de bandes de transport (11) pour acheminer des produits plats, **caractérisé par** au moins un dispositif selon l'une quelconque des revendications précédentes.
